# EUROPÄISCHE PATENTSCHRIFT

(11) **EP 0 826 548 B1**
(45) Veröffentlichungstag und Bekanntmachung des Hinweises auf die Patenterteilung: **14.11.2001**
(21) Anmeldenummer: 97114367.2
(22) Anmeldetag: 20.08.1997
(51) Int. Cl.: B60L 3/10

(54) **Verfahren zur Regelung des elektrischen Antriebs eines Schienenfahrzeugs**
Electric drive control method for a railway vehicle
Méthode de régulation d'entraînement électrique pour véhicules ferroviaires

(30) Priorität: 26.08.1996 DE 19634363
(43) Veröffentlichungstag der Anmeldung: 04.03.1998
(73) Patentinhaber: DaimlerChrysler AG, 70567 Stuttgart (DE)
(72) Erfinder: Schreiber, Rolf, 68199 Mannheim (DE); Kögel-Rüdiger, 76689 Karlsdorf-Neuthard (DE); Germann, Stefan, Dr., 64653 Lorsch (DE)
(74) Vertreter: Luderschmidt, Schüler & Partner GbR

(56) Entgegenhaltungen:
- EP-A- 0 621 156
- SCHREIBER R ET AL: "REGELUNG ZUR OPTIMALEN KRAFTSCHLUSS-AUSNUTZUNG BEI DREHSTROMLOKOMOTIVEN AUF DER BASIS DER STEIGUNG DER KRAFTSCHLUSSKENNLINIEN OPTIMAL ADHESION CONTROL FOR LOCOMOTIVES WITH THREE-PHASE DRIVES BASED ON GRADIENT CHARACTERISTIC CURVE OF ADHESION COEFFICIENT" ELEKTRISCHE BAHNEN, Bd. 93, Nr. 5, 1.Mai 1995, Seiten 157-163, XP000504758

## Beschreibung

Die Erfindung bezieht sich auf ein Verfahren zur Regelung des elektrischen Antriebs eines Schienenfahrzeugs unter Hochausnutzung des Kraftschlusses zwischen Rad und Schiene nach dem Oberbegriff des Anspruchs 1.

Ein solches Verfahren ist aus der EP-A2-0621 156 bekannt.

Das dort detailliert beschriebene Verfahren ermöglicht einen Betrieb im stabilen Bereich der jeweiligen Kraftschlußkennlinie kurz vor dem Kraftschlußmaximum. Ein als optimal erachteter Betriebspunkt kann vorgegeben werden, der sich automatisch - auch bei sich rasch und erheblich ändernder Kennlinie, also bei wechselnden Schienenverhältnissen - einstellt. Diese Arbeitsweise wird dadurch erreicht, daß als Betriebspunkt eine bestimmte Steigung der Kennlinien vorgegeben wird. Das Verfahren wird deshalb auch als Steigungsregelung bezeichnet. Im Kraftschlußmaximum ist beispielsweise die Steigung der Kennlinie immer Null, unabhängig von der absoluten Höhe des Kraftschlußmaximums. Da die Steigung der jeweiligen Kennlinie nicht direkt meßtechnisch erfaßbar ist, wird mit einer Ersatzgröße gearbeitet, deren Zusammenhang mit der Steigung bekannt ist. Als Ersatzgröße wird mit einer Phasenverschiebung zwischen einem den Motormomentensollwert überlagerten periodischen Testsignal und einer Ausgangsgröße gearbeitet, die aus einer z.B. an der Motorwelle gemessenen Winkelgeschwindigkeit gewonnen wird.

In der praktischen Erprobung hat sich gezeigt, daß mit dieser bekannten Steigungs- regelung das erwartete Betriebsverhalten erreicht wird, nämlich ein stabiler Betrieb nahe dem Kraftschlußmaximum unter Vermeidung von Schleuder- oder Gleitzuständen.

Dennoch sind Betriebssituationen beobachtet worden, die eine weitere Verbesserung des Verfahrens wünschenswert erscheinen lassen. Beispielsweise kann ein Anfahren eines Zuges bei Anwendung des bekannten Verfahrens dadurch erschwert oder gar unmöglich werden, daß das Kraftschlußmaximum aufgrund einer Schienenverunreinigung oder Nässe besonders niedrig ist und die verfahrensgemäß sich einstellende Zugkraftvorgabe für ein Anfahren nicht ausreicht. Eine andere unbefriedigende Situation kann bei sogenannten Beharrungsfahrten auftreten, in denen in einem bestimmten Streckenabschnitt aufgrund einer ungünstigen Kraftschlußkennlinie eine vorgegebene Fahrgeschwindigkeit nicht eingehalten werden kann, also die Fahrgeschwindigkeit wegen reduzierter Zugkraftvorgabe abnimmt.

Triebwagenführern sind sogenannte Konditionierungsmaßnahmen zur Verbesserung des Rad-Schiene-Kontaktes bekannt, die in einer Erhöhung der Verlustleistung durch Erhöhung des Schlupfes bestehen. Würde man jedoch zulassen, daß Triebwagenführer die Adhäsionsregelung außer Kraft setzen, um Konditionierungsmaßnahmen durchzuführen, so ginge gerade in besonders kritischen Fahrsituationen die Schutzfunktion der Adhäsionsregelung verloren. Durch einen steuernden Eingriff wäre es nicht möglich, den Antrieb so zu stabilisieren, daß sich eine bestimmte Schlupfgeschwindigkeit einstellt.

Der Erfindung liegt daher die Aufgabe zugrunde, Konditionierungsmaßnahmen zur Verbesserung des Rad-Schienen-Kontaktes im Rahmen des Verfahrens zur Adhäsionsregelung durch Steigungsregelung zu ermöglichen.

Diese Aufgabe wird bei einem Verfahren zur Regelung des elektrischen Antriebs eines Schienenfahrzeugs unter Hochausnutzung des Kraftschlusses zwischen Rad und Schiene nach dem Oberbegriff des Anspruchs 1 durch dessen kennzeichnende Merkmale gelöst. Vorteilhafte Ausgestaltungen sind in weiteren Ansprüchen angegeben.

Das Verfahren hat den Vorteil, daß völlig automatisiert - oder durch eine Anforderung durch einen Triebfahrzeugführer ausgelöst - im Rahmen der Adhäsionsregelung mit Steigungsregelung auf materialschonende Weise ein durch die Regelung stabilisierter Betrieb im sogenannten instabilen Bereich der Kraftschlußkennlinien ermöglicht wird. In bevorzugter Ausgestaltung des Verfahrens erfolgt die Steigungsregelung mit einer unterlagerten hochdynamischen Drehzahlregelung, die mögliche mechanische Schwingungen eines Drehgestells beim Fahren im instabilen Bereich bedämpft.

Eine ausführlichere Beschreibung der Erfindung erfolgt nachstehend anhand der Zeichnungsfiguren. Es zeigen:
- Fig. 1: eine Kraftschlußkennlinie mit einem ersten und einem zweiten Arbeitspunkt der Regelung,
- Fig. 2: eine Darstellung wie Fig. 1, jedoch mit einem Übergang des zweiten Arbeitspunkts zu einem dritten Arbeitspunkt auf einer durch Konditionierung erreichten neuen Kennlinie,
- Fig. 3: Struktur einer Adhäsionsregelung mit Steigungsregler und Konditionierer.

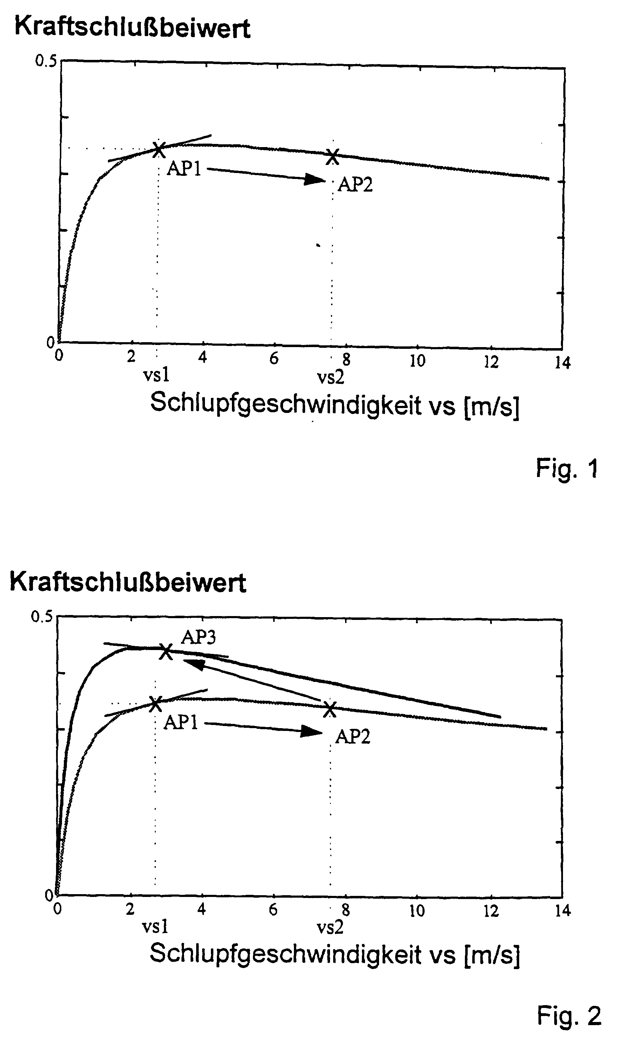

In **Fig. 1** ist beispielhaft eine ursprünglich gültige Kraftschlußkennlinie dargestellt, wobei der Kraftschlußbeiwert in Abhängigkeit von der Schlupfgeschwindigkeit vs aufgetragen ist. Mit AP1 ist ein erster Arbeitspunkt bezeichnet, der bisher ausschließlich - und bei der erfindungsgemäßen Weiterentwicklung des Verfahrens auch weiterhin im üblichen Fahrbetrieb - mit der Adhäsionsregelung eingestellt wird. Dieser erste Arbeitspunkt AP1 liegt kurz vor dem Kraftschlußmaximum. Im Kraftschlußmaximum ist die Steigung der Kennlinie Null; im ersten Arbeitspunkt AP1 wird also eine kleine positive Steigung als Sollwert vorgegeben.

Mit AP2 ist ein erfindungsgemäß vorgebbarer zweiter Arbeitspunkt bezeichnet, der im sogenannten instabilen Bereich, also in einem Bereich liegt, indem die Kraftschlußkennlinie fällt.

Mit einem geregelten allmählichen, also nicht sprungförmigen Übergang vom ersten zum zweiten Arbeitspunkt wird eine dynamische Steigerung der Schlupfgeschwindigkeit vs und damit eine Steigerung der Verlustleistung durch Erhöhung des Produkts aus Kraftschlußbeiwert, d.h. der Zugkraft pro Achse, und der Schlupfgeschwindigkeit erreicht. Daraus resultiert eine Erwärmung des Rades, welche beispielsweise Wasser im Radaufstandspunkt zur Verdampfung bringt. Durch diesen Reinigungseffekt, erreicht durch Verdampfung von Fremdschichten zwischen Rad und Schiene, ändert sich die ursprüngliche Kraftschlußkennlinie zu Kennlinien mit höherem Kraftschlußbeiwert.

In **Fig. 2** ist beispielhaft eine solche neue Kraftschlußkennlinie zusätzlich zu der in Fig. 1 bereits gezeigten ursprünglichen Kraftschlußkennlinie dargestellt. Ein neuer Arbeitspunkt AP3 auf dieser neuen Kennlinie kann durch eine bestimmte Steigung oder durch eine bestimmte Schlupfgeschwindigkeit definiert sein und ermöglicht gegenüber der ursprünglichen Kraftschlußkennlinie eine erhöhte Zugkraft.

Wird die beschriebene Konditionierungsmaßnahme beispielsweise mit der vorlaufenden ersten Achse eines Schienenfahrzeugs durchgeführt, so führt dies zumindest zu einem sogenannten Selbstkonditionierungseffekt für diese Achse. Unter der Voraussetzung, daß nachlaufende angetriebene Achsen auf der gleichen Spur der Schiene laufen, wird außerdem eine Nachlaufkonditionierung erreicht. Das heißt, diese Achsen finden günstigere Schienenbedingungen vor.

Die erfindungsgemäße Konditionierungsmaßnahme im Rahmen der Adhäsionsregelung durch Verschiebung des vorgegebenen Arbeitspunktes in den Bereich fallender Kennlinien kann automatisiert eingeleitet werden. Beispielsweise kann eine Unterscheidung der einstellbaren Zugkraft oder eine deutliche Reduktion der Geschwindigkeit während einer Beharrungsfahrt detektiert und daraus ein Informationssignal für einen Konditionierer eingeleitet werden, der dann für eine bestimmte Zeit oder bis eine geänderte Fahrsituation detektiert wird, die Konditionierungsmaßnahme durchführt. Der Konditionierer ist ein Funktionsblock, der aufgrund des eingegebenen Informationssignals einen geeigneten Sollwert für die Steigungsregelung errechnet.

Die Konditionsierungsmaßnahme kann auch aufgrund einer Anforderung eines Triebfahrzeugführers eingeleitet werden, wobei der Ablauf der Konditionierungsmaßnahme jedoch ebenfalls automatisiert erfolgt.

Es versteht sich, daß zur Durchführung der erfindungsgemäßen Konditionierung im Rahmen der Adhäsionsregelung eine Regelung erforderlich ist, die auch bei Einstellung eines Arbeitspunkts im Bereich fallender Kennlinien zu einem stabilen Fahrbetrieb führt.

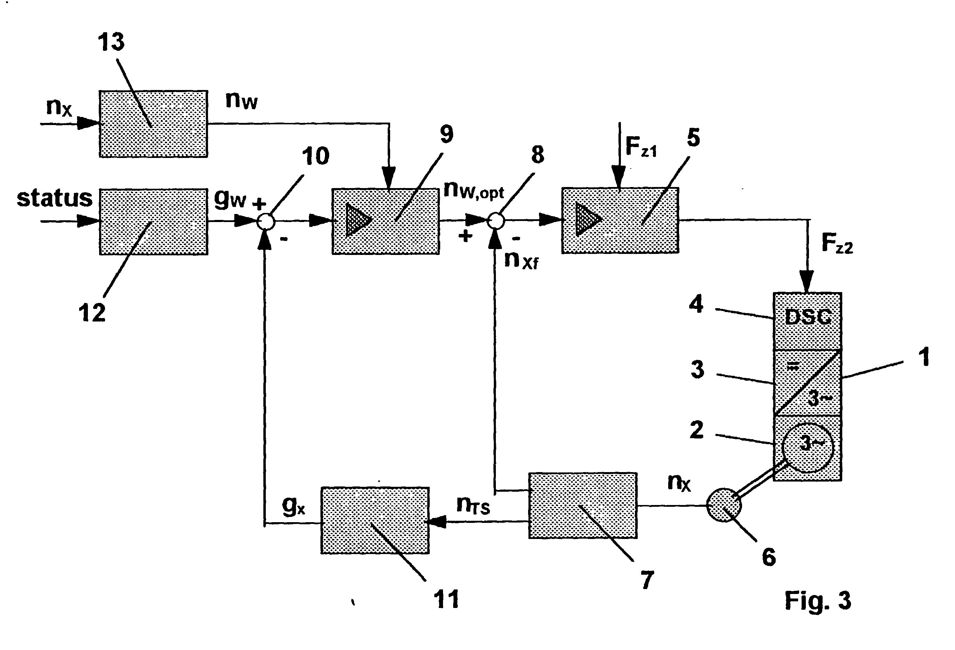

Bevorzugt einsetzbar ist zur Durchführung der Erfindung eine Adhäsionsregelung mit einer Kaskadenstruktur. Eine solche Struktur einer Adhäsionsregelung mit Steigungsregler und Konditionierer ist in Fig. 3 dargestellt. In dieser Struktur ist der Steigungsregelung eine Drehzahlregelung unterlagert.

**Fig. 3** zeigt einen Antriebsblock 1 für eine Achse eines Schienenfahrzeugs, der einen Motor 2, einen Umrichter 3 und eine Motorregeleinrichtung 4 enthält. Dem Antriebsblock 1 ist eine Stellgröße F_{Z2} zugeführt, die ein Drehzahlregler 5 liefert. Die Motordrehzahl nₓ wird mit einem Drehzahlsensor 6 erfaßt und über ein Drehzahlfilter 7 einer ersten Additionsstelle 8 zugeführt, an der die Regelabweichung zur Eingabe in den Drehzahlregler 5 gebildet wird. Dem Drehzahlregler 5 ist außerdem die vom Fahrzeugführer vorgegebene Sollzugkraft F_{Z1} (oder das Sollmoment) zugeführt. Die Sollzugkraft F_{Z1} bestimmt den Maximalwert der vom Drehzahlregler 5 ausgegebenen Stellgröße F_{Z2}; d.h. sie kann maximal der Sollzugkraft F_{Z1} entsprechen. Diesem Drehzahl-Regelkreis ist ein Regelkreis mit einem Steigungsregler 9 überlagert, der einen optimalen Drehzahlreferenzwert n_{w, opt} ausgibt, der der ersten Additionsstelle 8 zugeführt ist. Die dem Steigungsregler 9 zugeführte Regelabweichung wird an einer zweiten Additionsstelle 10 gebildet. Der zweiten Additionsstelle 10 ist als Istwert ein Ausgangssignal gₓ einer Einrichtung 11 zur Ermittlung der Phasenverschiebung zwischen einem Testsignal, das der Sollzugkraft F_{Z1} überlagert ist, und der im Drehzahlfilter 7 aus dem Drehzahlsignal nₓ gefilterten Reaktion n_{TS}. Einen der zweiten Additionsstelle 10 zugeführten Sollwert g_{w} liefert ein Konditionierer 12. Der Funktionsblock Konditionierer 12 errechnet aufgrund einer Statuseingabe den Sollwert g_{w} für die Steigungsregelung, also die Sollsteigung. Ein weiterer Funktionsblock 13 dient der Referenzgeschwindigkeitsberechnung. Die Berechnung der Referenzgeschwindigkeit n_{w} erfolgt auf der Basis aller gemessenen Motordrehzahlen nₓ (d.h. von allen Drehzahlsensoren aller Achsen) oder durch Messung der Geschwindigkeit über Grund. Der auf der Basis der gemessenen Motordrehzahlen errechnete Geschwindigkeitswert weicht in der Praxis von der tatsächlichen Geschwindigkeit über Grund ab. Die Referenzgeschwindigkeit n_{w} ist dem Steigungsregler 9 zugeführt, der nicht nur den optimalen Schlupfwert berechnet, sondern auch Abweichungen der Referenzgeschwindigkeit von der Geschwindigkeit über Grund korrigiert.

Für die Durchführung des Verfahrens ist wesentlich, daß der Drehzahlregler 5 deutlich schneller als der Steigungsregler 9 arbeitet, wodurch mögliche Probleme beim Fahren im instabilen Bereich der Kraftschlußkennlinie beherrschbar sind. Durch Fahren im instabilen Bereich der Kraftschlußkennlinien kann es nämlich zu sogenannten Slip-stick Schwingungen kommen. Diese sind mechanische Schwingungen, die bis zur Zerstörung des Drehgestells führen können. Aus diesem Grund wird der unterlagerte Drehzahlregler so dimensioniert, daß er zusätzlich zu seiner eigentlichen Aufgabe als Drehzahlregler auch diese Schwingungen aktiv bedämpft. Prinzipiell geht es dabei um die Torsionsschwingung des Radsatzes (Rad gegen Rad, Rollierschwingung) in der Größenordnung von etwa 60 Hz und der Torsionsschwingung zwischen Fahrmotor gegen Radsatz in der Größenordnung von 10 bis 20 Hz (Ratterschwingung),

## Patentansprüche

1. Verfahren zur Regelung des elektrischen Antriebs eines Schienenfahrzeugs unter Hochausnutzung des Kraftschlusses zwischen Rad und Schiene, wobei
- die Steigung der jeweils gültigen Kraftschlußkennlinie, also des Kraftschlußbeiwerts, als Funktion der Schlupfgeschwindigkeit ermittelt wird,
- die Differenz der ermittelten Steigung der Kraftschlußkennlinie zu einem vorgegebenen Steigungssollwert gebildet wird,
- die gebildete Differenz der Steigungswerte in einen Reduktionsfaktor umgesetzt wird, und
- durch Multiplikation des Reduktionsfaktors mit einem vorgegebenen Momentensollwert diesen auf einen Eingangs-Momentensollwert begrenzt, der dem elektrischen Antrieb zugeführt wird, und wobei
- im allgemeinen Fahr- bzw. Bremsbetrieb ein stabiler Arbeitsbereich mit einem positiven Steigungssollwert der jeweiligen Kraftschlußkennlinie nahe am Kraftschlußmaximum eingestellt wird,
**dadurch gekennzeichnet, daß**
- in vorgebbaren Betriebssituationen vorübergehend - und unter Vermeidung sprungförmiger Änderungen des Steigungssollwerts - ein Arbeitspunkt im sogenannten instabilen Bereich, also ein negativer Steigungssollwert vorgegeben wird, wodurch sich die Verlustleistung (Produkt aus Zugkraft und Schlupfgeschwindigkeit) erhöht und eine Konditionierung des Rad-Schiene-Kontakts eintritt, wobei Maßnahmen zur Stabilisierung des Antriebs im sogenannten instabilen Bereich durchgeführt werden,
- wobei der Ablauf der Konditionierungsmaßnahme automatisiert im Rahmen der Adhäsionsregelung mit Steigungsregelung erfolgt.

2. Verfahren nach Anspruch 1, **dadurch gekennzeichnet, daß** eine vorgebbare Betriebssituation eine Unterschreitung einer eingestellten Zugkraft oder eine bestimmte Reduktion der Fahrgeschwindigkeit während einer Beharrungsfahrt ist.

3. Verfahren nach Anspruch 1 oder 2, **dadurch gekennzeichnet, daß** zur Regelung des Eingangs-Momentensollwerts auf der Grundlage eines vorgegebenen Steigungssollwerts eine unterlagerte Drehzahlregelung durchgeführt wird, mit der insbesondere während eines Fahrbetriebs im instabilen Arbeitsbereich eine aktive Bedämpfung von mechanischen Schwingungen des Radsatzes durchgeführt wird.

## Claims

1. A method for an electric drive control of a railway vehicle in making particular use of the frictional connection beetween the wheel and the rail, wherein
- the slope of each valid characteristic line of the frictional connection, that is to say of the adhesion coefficient, is determined as a function of the wheel slipping velocity,
- the determined slope of the characteristic line of the frictional connection is subtracted from a predetermined set-point of the slope,
- the result of the slope subtraction is converted into a reduction factor, and
- by multiplying the reduction factor with a predetermined momental set-point, said momental set-point is limited to an initial momental set-point which is fed to the electric drive, and wherein,
- in the course of a general running or breaking operation, respectively, a stable working domain is set having a positive slope set-point for each characteristic line of frictional connection near the maximum of frictional connection,
said method being **characterized in that**,
- in avoiding discontinuous changes of the slope set-point, on predetermined operational conditions, an operating point is preliminarily provided in the so-called instable domain, that is to say there is predetermined a negative slope set-point, whereby power dissipation as the product of tractive forces and wheel slipping velocity is increased and conditioning of the wheel/rail contact is exerted, wherein actions are taken to stabilize the drive in the so-called instable domain, the process of the conditioning measure being erxerted automatically in the course of the adjustment of adhesion and slope.

2. The method of claim 1, **characterized in that** an operational condition that may be predetermined is the fall below an adjusted tractive force or a predetermined reduction of driving speed in the course of a run at balancing speed.

3. The method of claim 1 or 2, **characterized in that**, for the adjustment of the initial momental set-point on the basis of a predetermined slope set-point, a speed cascade control is exerted, wherwith, in particular during running operations in the instable working domain, an active absorption of machanical vibrations of the wheel-set is executed.

## Revendications

1. Procédé de régulation de la propulsion électrique d'un véhicule ferroviaire, fondé largement sur l'adhérence entre la roue et le rail, dans lequel
- la pente de chaque courbe d'adhérence valide, donc le coefficient d'adhérence, est déterminée en fonction de la vitesse de glissement,
- la différence avec la pente calculée de la courbe d'adhérence est définie comme une valeur théorique prédéfinie de la pente,
- la différence résultant entre les différentes valeurs de la pente est convertie en un facteur de réduction, et
- par la multiplication du facteur de réduction avec une valeur théorique prédéfinie du moment, celle-ci est limitée à une valeur théorique du moment entrée, qui est transmise vers le module de propulsion électrique, et dans lequel,
- en service de roulement et de freinage général, une zone de travail stable avec une valeur théorique de pente positive pour chaque courbe d'adhérence est régulée à proximité du maximum d'adhérence,
**caractérisé en ce que**
- dans des situations de service pouvant être prédéfinies, un point de fonctionnement dynamique est prédéfini temporairement - et en évitant les variations brusques de la valeur théorique de la pente - dans la zone dite instable, c'est-à-dire une valeur théorique négative de la pente, ce qui entraîne une augmentation de la puissance dissipée en tant que produit de la force de traction et de la vitesse de glissement et le déclenchement d'un conditionnement du contact entre la roue et le rail, des mesures de stabilisation de la propulsion étant effectuées dans la zone dite instable,
- la procédure d'exécution de la mesure de conditionnement étant automatisée dans le cadre de la régulation de l'adhérence avec une régulation de la pente.

2. Procédé selon la revendication 1, **caractérisé en ce qu'**une situation de service pouvant être prédéfinie est un écart vers le bas par rapport à une force de traction réglée ou une réduction déterminée de la vitesse de roulement pendant un parcours en état d'inertie.

3. Procédé selon la revendication 1 ou 2, **caractérisé en ce que** pour la régulation de la valeur théorique du moment entrée, basée sur une valeur théorique de la pente prédéfinie, il est effectué un réglage de la vitesse en cascade, par laquelle, notamment pendant un parcours dans la zone de travail instable, est effectué un amortissement actif des oscillations mécaniques de la paire de roues.
